⟨19⟩ **Europäisches Patentamt**

**European Patent Office**

**Office européen des brevets**

⟨11⟩ Veröffentlichungsnummer: **0 532 987 B1**

⟨12⟩ # EUROPÄISCHE PATENTSCHRIFT

⟨45⟩ Veröffentlichungstag der Patentschrift: **29.11.95**

⟨51⟩ Int. Cl.⁶: **B60R 16/00**

⟨21⟩ Anmeldenummer: **92115043.9**

⟨22⟩ Anmeldetag: **03.09.92**

⟨54⟩ **Lenkradkreuztastersystem für ein Fahrzeug.**

⟨30⟩ Priorität: **18.09.91 DE 4130993**

⟨43⟩ Veröffentlichungstag der Anmeldung:
**24.03.93 Patentblatt 93/12**

⟨45⟩ Bekanntmachung des Hinweises auf die
Patenterteilung:
**29.11.95 Patentblatt 95/48**

⟨84⟩ Benannte Vertragsstaaten:
**DE FR GB**

⟨56⟩ Entgegenhaltungen:
**EP-A- 0 239 998**
**DE-A- 3 842 414**
**FR-A- 2 639 708**
**US-A- 5 021 771**

**RESEARCH DISCLOSURE Bd. 328, Nr. 018,
August 1991, EMSWORTH (GB) , XP217888,
ANON. 'Vehicle Display and Control System
Utilizing a Pointing Device'.**

⟨73⟩ Patentinhaber: **Adam Opel Aktiengesellschaft
Bahnhofsplatz 1
D-65428 Rüsselsheim (DE)**

⟨72⟩ Erfinder: **Reck, Lothar, Ing. grad.
Keplerring 50
W-6090 Rüsselsheim (DE)**

⟨74⟩ Vertreter: **Bergerin, Ralf, Dipl.-Ing. et al
Adam Opel AG
Patentwesen
D-65423 Rüsselsheim (DE)**

Rank Xerox (UK) Business Services
(3.10/3.09/3.3.3)

## Beschreibung

Die Erfindung betrifft ein Lenkradkreuztastersystem für ein Fahrzeug, bei dem ein mit einer Lenkwelle verbundenes Lenkrad gegenüber der Fahrzeugkarosserie drehbar angeordnet ist mit einem am Lenkrad angebrachten, elektrische Kontakte schließenden Bedienelement.

Bei modernen Fahrerinformationssystemen für Fahrzeuge ist ein Display vorgesehen, dessen Bildinhalt über eine Cursorsteuerung bearbeitet werden kann.

Als Bedienelement für die Steuerung eines Cursors auf dem Monitor eines Personal Computers findet u. a. eine Tastatur mit vier mit Pfeilen markierten Tasten für die vier Hauptrichtungen Anwendung. Diese Tasten sind jedoch ortsfest zu benutzen, denn bei einer Verdrehung der Tastatur z. B. um 180° gegenüber der Normallage verlieren die Markierungen auf den Tasten ihren Sinn. Die Zuordnungen haben sich ins Gegenteil verkehrt.

Es sind Kreuztastersysteme bekannt als Bedienelemente, z. B. zum elektrischen Verstellen der Außenspiegel eines Kraftfahrzeuges, die bezüglich der Karosserie ebenfalls ortsfest sind.

Auch ist aus der DE-PS 35 24 140 bekannt, Bedienelemente für verschiedenste elektrische Steuerungsfunktionen in einem Einlageteil im Zentrum des Lenkrades anzuordnen, wobei das Einlageteil stationär gegenüber der Fahrzeugkarosserie unabhängig von Drehungen des Lenkrades gehalten ist. Dabei dient ein Planetengetriebesatz dazu, einen bestimmten Betrag einer Lenkraddrehung so auf das Einlageteil zu übertragen, daß dieses um den gleichen Betrag in die entgegengesetzte Richtung gedreht wird.

Der vorliegenden Erfindung liegt die Aufgabe zugrunde, ein Lenkradkreuztastersystem für ein Fahrzeug anzugeben, das mit dem Lenkrad verdreht werden kann und bei der Bedienung unabhängig von der jeweiligen Lage des Bedienelementes bezüglich der Karosserie ist.

Diese Aufgabe wird erfindungsgemäß dadurch gelöst, daß das Bedienelement kreisförmig angeordnete Kontakte aufweist, die den Eingängen einer elektronischen Recheneinheit zugeführt sind, daß mit der Lenkwelle ein Potentiometer gekoppelt ist, dessen Kontakte weiteren Eingängen der Recheneinheit zugeführt sind, durch die unabhängig von der Verdrehung des Lenkrades ermittelt wird, in welcher der bezüglich der Karosserie definierten Richtungen "Oben", "Unten", "Links", "Rechts" Kontakt ausgelöst ist.

Das mit der Lenkwelle gekoppelte Potentiometer hat dabei eine mit der Karosserie ortsfest verbundene Widerstandsbahn, während der Abgriff über die Lenkwelle betätigt wird. Vorzugsweise wird ein Drehpotentiometer eingesetzt, das direkt oder indirekt mittels eines speziellen Mechanismus über die Lenkwelle betätigt wird. Den dabei abgegriffenen Spannungswerten lassen sich dadurch Lenkradspindelwinkel zuordnen, die in der Recheneinheit gebildet werden. Das am Lenkrad angeordnete Bedienelement ist ähnlich wie ein Drehpotentiometer ausgestaltet, im Unterschied dazu ist aber der Abgriff nicht verdrehbar. Statt dessen ist dieser als ringförmiges federndes Kontaktelement ausgebildet, das ringsum an beliebigen Stellen durch Druck mit der darunterliegenden Widerstandsbahn in Kontakt gebracht werden kann und dadurch eine vom Bediener gewählte Spannung abgreift. Diesem Spannungswert wird von der Recheneinheit ein Lenkradtasterwinkel zugeordnet. Lenkradspindelwinkel und Lenkradtasterwinkel werden durch ein in der elektronischen Recheneinheit abzuarbeitendes Programm verknüpft und durch verschiedene Differenzenbildungen auf ein Toleranzkriterium abgefragt. Dabei werden stets vier indizierte Werte überprüft von denen nur einer das Toleranzkriterium erfüllen kann. Der Index ist dann für die Richtungssteuerung des Cursors die maßgebende Größe. Falls der erste Wert das Toleranzkriterium erfüllt, soll der Cursor nach "Oben" bewegt werden. Ist es der zweite Wert, bewegt sich der Cursor nach "Links", ist es der dritte Wert, bewegt sich der Cursor nach "Unten" und für den Fall, daß der vierte Wert das Toleranzkriterium erfüllt, wird der Cursor nach "Rechts" bewegt. Das Bedienelement hat keine Markierungen für die vier Hauptrichtungen, da diese bei Verdrehung des Lenkrades ihre Eindeutigkeit verlieren würden. Statt dessen definiert der Bediener gefühlsmäßig bezüglich der Karosserie was die vier Hauptrichtungen sind. So braucht er bei Geradeausfahrt wie bei Kurvenfahrt das Bedienelement nur von seinem Gefühl geleitet beispielsweise "Oben" zu drücken, um den Cursor jeweils nach "Oben" zu bewegen.

Weitere vorteilhafte Ausgestaltungen der Erfindung ergeben sich aus den Unteransprüchen.

Nachstehend wird anhand der Zeichnungen ein Ausführungsbeispiel im einzelnen näher erläutert. Es zeigen:

Fig. 1     eine teils perspektivische Ansicht des Lenkradkreuztastersystems im Zusammenwirken mit der elektronischen Recheneinheit und einem Display;

Fig. 2     ein Prinzipschaltbild der optoelektronischen Übertragung des Lenkradtasterwinkels an die elektronische Recheneinheit;

Fig. 3 a    das Bedienelement mit diskreten Kontakten in der Grundplatte und einem kontinuierlichen Kontakt in der Deckplatte;

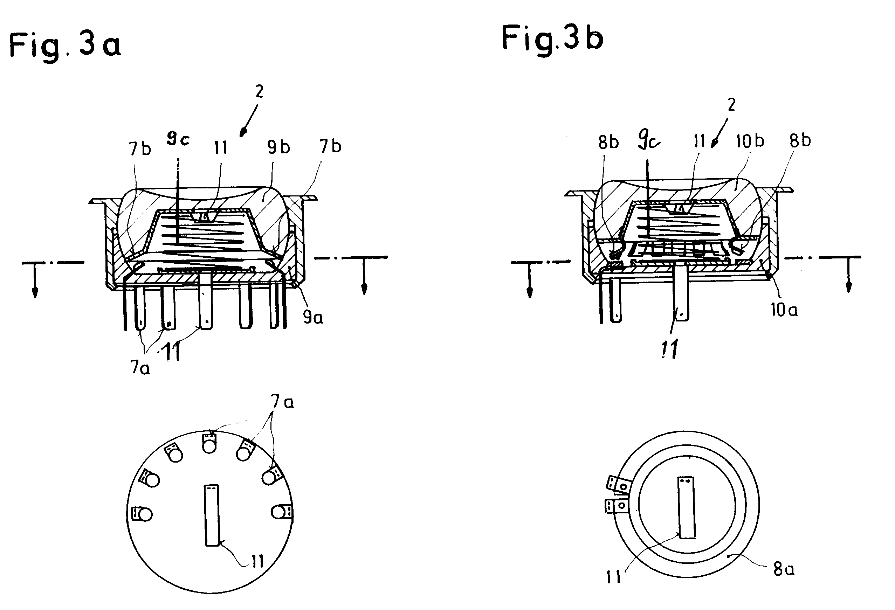

Fig. 3 b    das Bedienelement mit diskreten Kontakten in der Deckplatte und einem kontinuierlichen Kontakt in der Grundplatte;

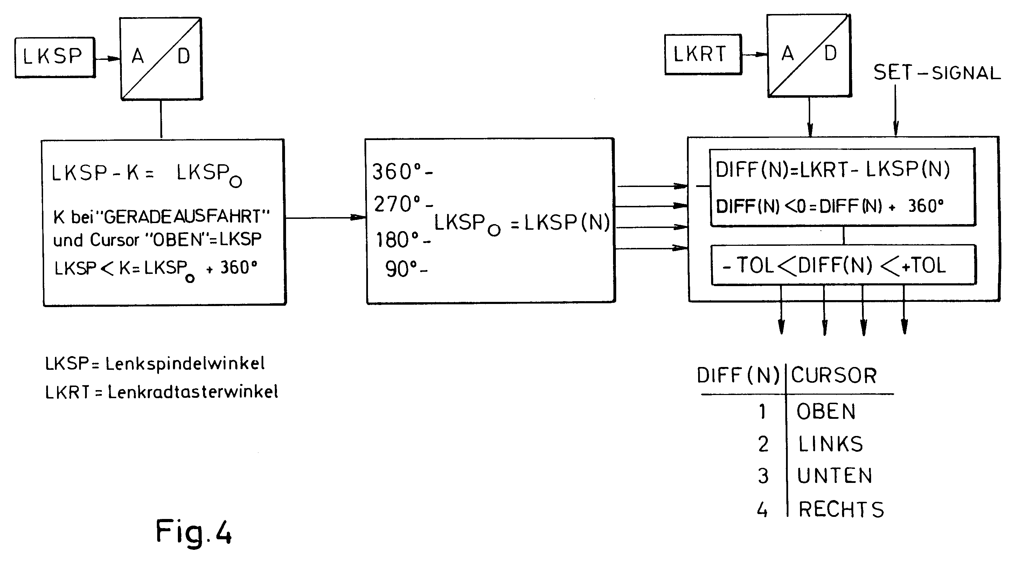

Fig. 4     ein Schema zur Berechnung der Cursorsteuerung;

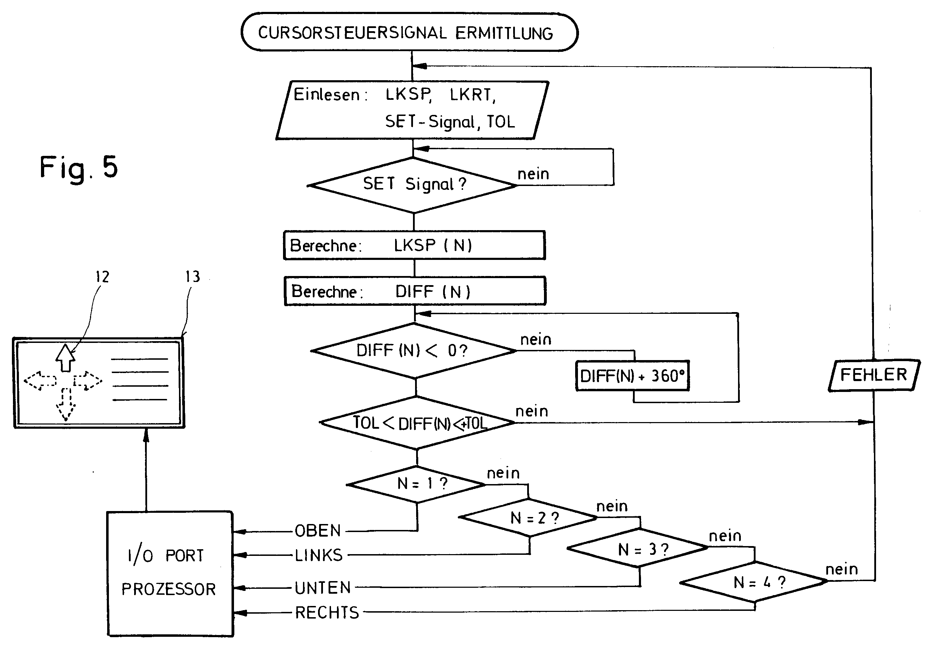

Fig. 5     ein Flußdiagramm zur Berechnung der Cursorsteuerung.

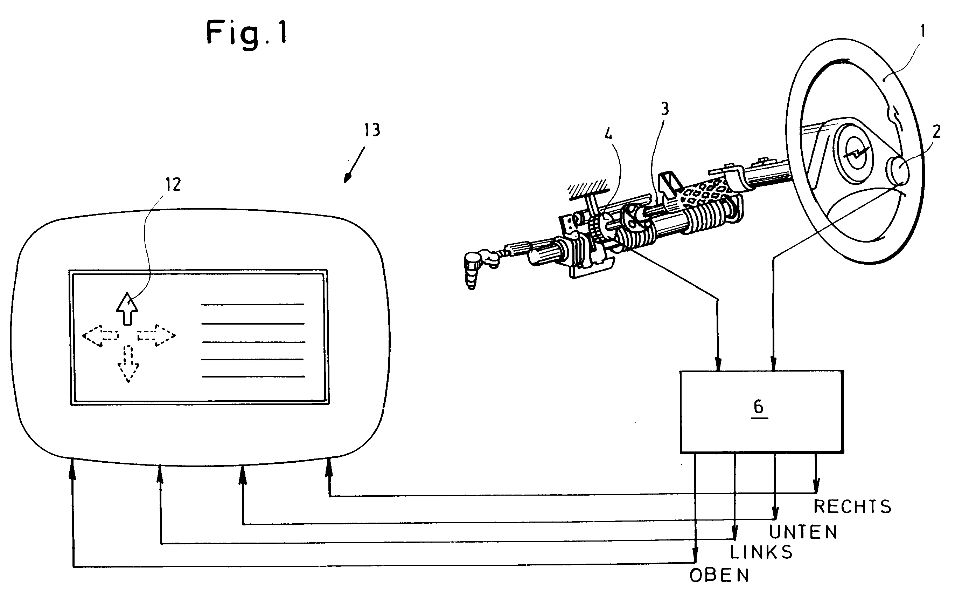

Das in der Figur 1 dargestellte erfindungsgemäße Lenkradkreuztastersystem zeigt mit Bezugszeichen 1 das Lenkrad, an dem das Bedienelement 2 vorzugsweise an einer Speiche angeordnet ist. Es ließe sich ohne Beeinträchtigung der Funktionalität und des Erfindungsgedankens auch im Zentrum des Lenkrades 1 oder mit entsprechender konstruktiver Ausgestaltung an der Peripherie des Lenkrades 1 anordnen. Desgleichen könnte das gesamte Lenkrad 1 durch entsprechende Ausgestaltung die Funktion des Bedienelementes 2 haben.

Die mit dem Lenkrad verbundene Lenkwelle 3 führt zu einem mit ihr gekoppelten Drehpotentiometer 4, dessen Schleifer oder Abgriff mit der Lenkwelle 3 fest verbunden ist und dessen Widerstandsbahn ortsfest an der Karosserie angebracht ist. Statt dieser direkter Kopplung kann auch eine indirekte Kopplung Anwendung finden, indem z.B. die Lenkwelle 3 eine Verzahnung hat, die mit einem Abtriebsritzel kämmt, das den Abgriff des Potentiometers bewegt. Auch ließen sich lineare Potentiometer statt Drehpotentiometer verwenden.

Die Kontakte von Bedienelement 2 und Potentiometer 4 sind den Eingängen der elektronischen Recheneinheit 6 zugeführt, durch die unabhängig von der Verdrehung des Lenkrades 1 ermittelt wird, in welcher der bezüglich der Karosserie definierten Richtungen "Oben", "Unten", "Links", "Rechts" Kontakt am Bedienelement 2 ausgelöst ist. Die elektronische Recheneinheit 6 liefert an ihrem Ausgang vier Signale, die zur Steuerung des Cursors 12 des Displays 13 benutzt werden.

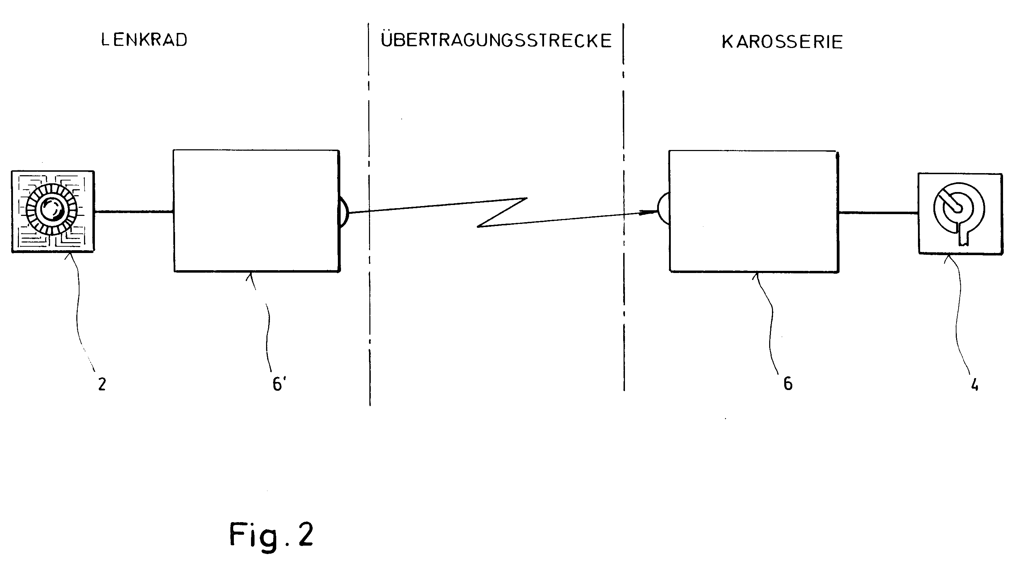

Die Informationen, die das Bedienelement 2 liefert, können galvanisch oder gemäß Figur 2 auf optoelektronischem Übertragungsweg mittels Sender 6' an die Recheneinheit 6 mit entsprechendem Empfangsteil übertragen werden.

Die Figuren 3 a und 3 b zeigen Ausführungsformen des Bedienelementes 2. Gemäß Figur 3 a sind elektrisch miteinander verbundene diskrete, kreisförmig angeordnete Kontakte 7 a in der Grundplatte 9 a angebracht und beabstandet dazu ist ein ebenfalls kreisförmiger, kontinuierlicher, tellerförmiger Kontaktring 7 b in der Deckplatte 9 b angebracht, der als Abgriff dient. Der Abstand zwischen dem Kontaktring 7 b und der Grundplatte 9 a wird mittels Druckfeder 9 c ringsum gewährleistet. Der Stromkreis wird beim Drücken der Deckplatte 9 b z. B. auf der rechten Seite über den Mittelkontakt 11, Feder 9 c und Kontaktring 7 b zum Kontakt 7 a elektrischleitend (da alle Teile aus Metall sind) geschlossen.

Gemäß Figur 3 b ist der kreisförmige Kontakt 8 a in der Grundplatte 10 a kontinuierlich, während der als Abgriff dienende in der Deckplatte 10 b angebrachte kreisförmige Kontakt 8 b aus mehreren miteinander elektrisch verbundenen federnden diskreten Zungen besteht.

Durch Drücken des Bedienelementes an einer beliebigen Stelle an der Peripherie können verschiedene Spannungen und zugeordnet dazu entsprechende verschiedene Lenkradtasterwinkel abgegriffen werden.

Das Schema gemäß Figur 4 zur Berechnung der Cursorsteuerung geht dabei von den bei den Eingangsgrößen Lenkradspindelwinkel LKSP, abgegriffen am Drehpotentiometer 4 und dem Lenkradtasterwinkel LKRT, abgegriffen am Bedienelement 2 aus.

Zunächst wird der A/D gewandelte Lenkradspindelwinkel LKSP justiert. Bei Geradeausfahrt weist die $0°/360°$ Markierung im gewählten Beispiel nach oben. Sollte diese Markierung um den Betrag K etwas versetzt sein, wird eine Korrektur mit den Konstanten K gemäß der Beziehung LKSP - K = $LKSP_o$ ausgeführt.

Falls LKSP < K werden zu $LKSP_o$ noch $360°$ hinzuaddiert. Dies dient als Vorbereitungsschritt für die weiteren Rechenoperationen.

Wird vom Hauptprogramm, das die Steuerung des Menüs auf dem Bildschirm bewerkstelligt, ein Cursorbefehl erwartet, so wird ein Set-Signal gesetzt. Das nächstfolgende Tastersignal wird eingelesen und zusammen mit dem Wert der Lenkradstellung zur Berechnung der Position des Tasterbefehls verwendet.

Nun werden vier erste Differenzen LKSP(N) mit N = 1, 2, 3, 4 gebildet, indem als erstem Wert von $360°$ $LKSP_o$ subtrahiert wird. Als zweiter Wert wird gebildet $270°$ - $LKSP_o$ = LKSP(2). Als dritter Wert wird gebildet $180°$ - $LKSP_o$ = LKSP(3) und als vierter Wert wird gebildet $90°$ - $LKSP_o$ = LKSP(4). Danach wird der A/D gewandelte Lenkradtasterwinkel LKRT zur Bildung zweiter vier Differenzen Diff-(N), N = 1, 2, 3, 4 herangezogen, indem gebildet wird LKRT - LKSP(N) = Diff(N). Falls Diff(N) < 0 wird $360°$ hinzuaddiert.

Dann werden die Differenzen Diff(N) mit einem Toleranzkriterium - Tol < Diff(N) < + Tol verglichen, wobei nur eine der vier Differenzen dieses Toleranzkriterium erfüllen kann. Wesentlich ist dabei, welche der vier Differenzen Diff(N) das Toleranzkriterium erfüllt. Falls es die erste Differenz Diff(1) war, wird der Cursor nach "Oben" bewegt. Falls es die zweite Differenz Diff(2) war, wird der Cursor nach "Links" bewegt, falls es die dritte Differenz Diff(3) war, wird der Cursor nach "Unten" bewegt und falls es die vierte Differenz Diff(4) war, wird der Cursor nach "Rechts" bewegt. Dieses Berechnungsschema ist in der Figur 5 als Flußdiagramm dargestellt. Es werden eingelesen LKSP, LKRT, Set-Signal und Tol. Dann wird das Set-Signal abgefragt, um anschließend LKSP(N) und weiter Diff(N) zu berechnen. Im nachfolgenden Schritt muß eventuell gebildet werden Diff(N) + 360° und dann wird das Toleranzkriterium - Tol < Diff(N) < + Tol abgefragt. Falls keiner der vier Differenzen Diff(N) dieses Kriterium erfüllt, liegt ein Fehler vor. Ansonsten wird über die Indizierung der Differenzen der Cursor 12 gesteuert.

Das Toleranzkriterium liegt in einer bevorzugten Ausführungsform bei ± 10° bis ± 30°. Geht man bei einem konkreten Fall davon aus, daß das Lenkrad beispielsweise um 90° nach rechts gedreht wurde und das Bedienelement 2 "Oben" gedrückt wurde, so bedeutet dies, daß LKRT = 270° ist. O° sei dabei bei Geradeausfahrt "Oben". Falls keine Korrektur um K notwendig ist, wird LKSP(N) gebildet zu

$$LKSP(1) = 360° - 90° = 270°$$
$$LKSP(2) = 270° - 90° = 180°$$
$$LKSP(3) = 180° - 90° = 90°$$
$$LKSP(4) = 90° - 90° = 0$$

Nun wird gebildet Diff(N) = LKRT - LKSP(N)

$$Diff(1) = 270° - 270° = 0°$$
$$Diff(2) = 270° - 180° = 90°$$
$$Diff(3) = 270° - 90° = 180°$$
$$Diff(4) = 270° - 0° = 270°$$

Jetzt wird gebildet - Tol < Diff(N) < + Tol mit Tol ± 10°.

Diese Bedingung gilt nur für Diff(1). Für N = 1 gilt "Oben" als Zuordnung für die Cursorsteuerung.

Das erfindungsgemäße Bedienelement 2 läßt sich auch auf die Verstellung der Außenspiegel anwenden.

**Patentansprüche**

1. Lenkradkreuztastersystem für ein Fahrzeug, bei dem ein mit einer Lenkwelle (3) verbundenes Lenkrad (1) gegenüber der Fahrzeugkarosserie drehbar angeordnet ist mit einem am Lenkrad (1) angebrachten, elektrische Kontakte schließenden Bedienelement (2), dadurch gekennzeichnet, daß das Bedienelement (2) kreisförmig angeordnete Kontakte (7 a, 7 b, 8 a, 8 b) aufweist, die den Eingängen einer elektronischen Recheneinheit (6) zugeführt sind, daß mit der Lenkwelle (3) ein Potentiometer (4) gekoppelt ist, dessen Kontakte weiteren Eingängen der Recheneinheit (6) zugeführt sind, durch die unabhängig von der Verdrehung des Lenkrades (1) ermittelt wird, in welcher der bezüglich der Karosserie definierten Richtungen "Oben", "Unten", "Links", "Rechts" Kontakt ausgelöst ist.

2. Lenkradkreuztastersystem nach Anspruch 1, dadurch gekennzeichnet, daß das Potentiometer (4) direkt von der Lenkwelle (3) betätigt wird.

3. Lenkradkreuztastersystem nach Anspruch 1 oder 2, dadurch gekennzeichnet, daß sich das Bedienelement (2) aus einer mit diskreten bzw. kontinuierlichen ersten Kontakten (7 a bzw. 8 a) versehenen Grundplatte (9 a, 10 a) und einer mit zur Grundplatte (9 a, 10 a) beabstandeten zweiten mit kontinuierlichen bzw. diskreten Kontakten (7 b bzw. 8 b) versehenen Deckplatte (9 b, 10 b) zusammensetzt.

4. Lenkradkreuztastersystem nach einem der vorangehenden Ansprüche, dadurch gekennzeichnet, daß die ersten Kontakte (7 a bzw. 8 a) eine kreisförmige Potentiometerbahn bilden und die zweiten Kontakte (7 b, 8 b) Abgriffe darstellen.

5. Lenkradkreuztastersystem nach einem der vorangehenden Ansprüche, dadurch gekennzeichnet, daß die jeweiligen am Bedienelement (2) abgegriffenen Spannungswerte galvanisch oder optoelektronisch der Recheneinheit (6) zugeführt sind.

6. Lenkradkreuztastersystem nach einem der vorangehenden Ansprüche, dadurch gekennzeichnet, daß Ausgänge der Recheneinheit (6) mit einem Fahrerinformationssystem mit einem Display (13) verbunden sind, dessen Cursorsteuerung über das Bedienelement (2) erfolgt.

7. Verfahren zur lenkradstellungs unabhängigen Steuerung eines Cursors (12) durch das Bedienelement (2) nach einem der Ansprüche 1 bis 7, dadurch gekennzeichnet, daß der am Potentiometer (4) anliegende aktuelle Spannungswert einem Lenkradspindelwinkel (LKSP) zugeordnet wird, dessen Wert jeweils zur Bildung erster vier Differenzen (LKSP$_N$ mit N = 1, 2, 3, 4) von 360° als erstem, 270° als zweitem, 180° als drittem, 90° als viertem Wert subtrahiert wird.

8. Verfahren nach Anspruch 7, dadurch gekennzeichnet, daß der am Bedienelement (2) getastete Spannungswert einem Lenkradtasterwinkel (LKRT) zugeordnet wird und daß zur Bildung zweiter vier Differenzen vom Lenkradtasterwinkel (LKRT) jeweils die Werte der ersten vier Differenzen (LKSP$_N$ mit N = 1, 2, 3, 4) subtrahiert werden.

9. Verfahren nach Anspruch 8, <u>dadurch gekennzeichnet</u>, daß die zweiten vier Differenzen auf ein Toleranzkriterium abgefragt werden und daß bei Erfüllen des Toleranzkriteriums abgefragt wird, welcher der vier Werte der zweiten vier Differenzen das Toleranzkriterium erfüllt.

10. Verfahren nach Anspruch 9, <u>dadurch gekennzeichnet</u>, daß der Cursor (12) nach "Oben" bewegt wird, wenn der erste Wert, nach "Links", wenn der zweite Wert, nach "Unten", wenn der dritte Wert, nach "Rechts", wenn der vierte Wert der zweiten vier Differenzen das Toleranzkriterium erfüllt hat.

11. Verfahren nach Anspruch 10, <u>dadurch gekennzeichnet</u>, daß das Toleranzkriterium ± 10° bis ± 30° beträgt.

**Claims**

1. Steering wheel cross sensor system for a vehicle, in which a steering wheel (1) connected to a steering shaft (3) is arranged rotatably with respect to the body of the vehicle with a control element (2), closing electrical contacts, mounted on the steering wheel (1), <u>characterised in that</u> the control element (2) comprises contacts (7a, 7b, 8a, 8b) arranged in the shape of a circle, which are fed to the inputs of a calculating unit (6), that linked to the steering shaft (3) there is a potentiometer (4) whose contacts are fed to further inputs of the calculating unit (6) by means of which, independently of the turning of the steering wheel (1), it is established in which of the directions "Up", "Down", "Left", "Right" defined with respect to the body, contact is tripped.

2. Steering wheel cross sensor system according to claim 1, <u>characterised in that</u> the potentiometer (4) is actuated directly from the steering shaft (3).

3. Steering wheel cross sensor system according to claim 1 or 2, <u>characterised in that</u> the control element (2) is composed of a base plate (9a, 10a) provided with discrete or continuous first contacts (7a or 8a) and a cover plate (9b, 10b) provided with second continuous or discrete contacts (7b or 8b) spaced at a distance from the base plate (9a, 10a).

4. Steering wheel cross sensor system according to any of the preceding claims, <u>characterised in that</u> the first contacts (7a or 8a) form a circular potentiometer track and the second contacts (7b, 8b) represent taps.

5. Steering wheel cross sensor system according to any of the preceding claims, <u>characterised in that</u> the respective voltage values tapped on the control element (2) are fed galvanically or opto-electronically to the calculating unit (6).

6. Steering wheel cross sensor system according to any of the preceding claims, <u>characterised in that</u> outputs of the calculating unit (6) are connected to a driver information system with a display (13) whose cursor control occurs via the control element (2).

7. Method for the control, independently of the position of the steering wheel, of a cursor (12) by the control element (2) according to any of the claims 1 to 7, <u>characterised in that</u> the actual voltage value residing on the potentiometer (4) is associated with a steering wheel spindle angle (LKSP) whose value is subtracted in each case to form four first differences (LKSP$_N$ with N = 1, 2, 3, 4) from 360° as the first, 270° as the second, 180° as the third, 90° as the fourth value.

8. Method according to claim 7, <u>characterised in that</u> the voltage value sensed at the control element (2) is associated with a steering wheel sensor angle (LKRT) and that to form four second differences, each of the values of the first four differences (LKSP$_N$ with N = 1, 2, 3, 4) are subtracted from the steering wheel sensor angle (LKRT).

9. Method according to claim 8, <u>characterised in that</u> the four second differences are tested with regard to a tolerance criterion and that on fulfilment of the tolerance criterion, it is tested which of the four values of the four second differences fulfils the tolerance criterion.

10. Method according to claim 9, <u>characterised in that</u> the cursor (12) is moved to "Up" if the first value, to "Left" if the second value, to "Down" if the third value, to "Right" if the fourth value of the four second differences has fulfilled the tolerance criterion.

11. Method according to claim 10, <u>characterised in that</u> the tolerance criterion amounts to ± 10° to ± 30°.

## Revendications

1. Système de contacteur à contacts en croix placé sur le volant pour un véhicule dans lequel un volant (1) lié à un arbre de direction (3) est monté tournant par rapport à la carrosserie du véhicule, comportant un élément de commande (2) qui est monté sur le volant (1) et ferme des contacts électriques, caractérisé par le fait que l'élément de commande (2) présente des contacts (7a, 7b, 8a, 8b) disposés en cercle qui sont reliés aux entrées d'une unité (6) électronique de calcul, par le fait qu'un potentiomètre (4) est couplé à l'arbre de direction (3), potentiomètre dont les contacts sont reliés à d'autres entrées de l'unité (6) de calcul au moyen desquelles, indépendamment de la rotation du volant (1), on détermine la direction par rapport à la carrosserie, "haut", "bas", "gauche", "droite", dans quelle le contact est déclenché.

2. Système de contacteur à contacts en croix placé sur le volant selon la revendication 1, caractérisé par le fait que le potentiomètre (4) est actionné directement par l'arbre (3) du volant.

3. Système de contacteur à contacts en croix placé sur le volant selon la revendication 1 ou la revendication 2, caractérisé par le fait que l'élément de commande (2) se compose d'une platine de base (9a, 10a) avec des premiers contacts (7a et 8a) discrets ou continus et d'une platine de couverture (9b, 10b) avec des seconds contacts (7b et 8b) discrets ou continus disposés à distance de la platine de base (9a, 10a).

4. Système de contacteur à contacts en croix placé sur le volant selon l'une des revendications précédentes, caractérisé par le fait que les premiers contacts (7a et 8a) forment une piste de potentiomètre circulaire et les deuxièmes contacts (7b, 8b) constituent les points de prélèvement.

5. Système de contacteur à contacts en croix placé sur le volant selon l'une des revendications précédentes, caractérisé par le fait que les tensions prélevées chaque fois au niveau de l'élément de commande (2) sont transmises par voie galvanique ou par voie opto-électronique à l'unité (6) de calcul.

6. Système de contacteur à contacts en croix placé sur le volant selon l'une des revendications précédentes, caractérisé par le fait que des sorties de l'unité (6) de calcul sont connectées à un système d'information du conducteur avec un moyen d'affichage (13) dont la commande du curseur a lieu par l'intermédiaire de l'élément de commande (2).

7. Procédé pour la commande d'un curseur (12) indépendamment de la position du volant, au moyen de l'élément de commande (2) conformément à l'une des revendications 1 à 6, caractérisé par le fait que l'on associe la tension actuelle disponible au niveau du potentiomètre (4) à un angle d'arbre de direction (LKSP) dont la valeur, pour former respectivement quatre premières différences ($LKSP_N$ avec N = 1, 2, 3, 4), est retranchée de 360° comme première valeur, de 270° comme deuxième valeur, de 180° comme troisième valeur et de 90° comme quatrième valeur.

8. Procédé selon la revendication 7, caractérisé par le fait que l'on associe la tension détectée au niveau de l'élément de commande (2) à un angle de rotation du contacteur monté sur le volant (LKRT) et que pour former quatre deuxièmes différences on retranche de l'angle de rotation du contacteur de volant (LKRT) respectivement les valeurs des quatre premières différences ($LKSP_N$ avec N = 1, 2, 3, 4).

9. Procédé selon la revendication 8, caractérisé par le fait que l'on interroge les quatre deuxièmes différences sur un critère de tolérance et par le fait que lorsque ledit critère de tolérance est satisfait, on recherche laquelle des quatre valeurs des quatre deuxièmes différences satisfait ledit critère de tolérance.

10. Procédé selon la revendication 9, caractérisé par le fait que l'on déplace le curseur "vers le haut" lorsque la première valeur des quatre deuxièmes différences satisfait le critère de tolérance, "vers la gauche" lorsque la deuxième valeur des quatre deuxièmes différences satisfait le critère de tolérance, "vers le bas" lorsque la troisième valeur des quatre deuxièmes différences satisfait le critère de tolérance, "vers la droite" lorsque la quatrième valeur des quatre deuxièmes différences satisfait le critère de tolérance.

11. Procédé selon la revendication 10, caractérisé par le fait que le critère de tolérance est compris entre ± 10° et ± 30°.

# Fig.1

Fig. 2

Fig.3a

Fig.3b

Fig.4

LKSP = Lenkspindelwinkel

LKRT = Lenkradtasterwinkel

SET−SIGNAL

$LKSP - K = LKSP_O$

K bei "GERADEAUSFAHRT" und Cursor "OBEN" = LKSP

$LKSP < K = LKSP_O + 360°$

360° −
270° −
180° −
90° −
$LKSP_O = LKSP(N)$

$DIFF(N) = LKRT - LKSP(N)$

$DIFF(N) < 0 = DIFF(N) + 360°$

$-TOL < DIFF(N) < +TOL$

| DIFF(N) | CURSOR |
|---|---|
| 1 | OBEN |
| 2 | LINKS |
| 3 | UNTEN |
| 4 | RECHTS |

EP 0 532 987 B1

Fig. 5

CURSORSTEUERSIGNAL ERMITTLUNG

Einlesen: LKSP, LKRT, SET-Signal, TOL

SET Signal? — nein → FEHLER

Berechne: LKSP (N)

Berechne: DIFF (N)

DIFF (N) < 0? — nein

DIFF(N) + 360°

TOL < DIFF(N) < +TOL — nein → FEHLER

N = 1? — nein
N = 2? — nein
N = 3? — nein
N = 4? — nein → FEHLER

OBEN
LINKS
UNTEN
RECHTS

I/O PORT PROZESSOR

13

12